# EUROPEAN PATENT APPLICATION

(11) **EP 4 480 685 A1**
(43) Date of publication of application: **25.12.2024**
(21) Application number: 24182736.9
(22) Date of filing: 18.06.2024
(51) Int. Cl.: B29D 30/00

(54) **RFID TAG WITHIN RUBBER SUBSTRATE**

(30) Priority: 20.06.2023 US 202363509043 P; 18.04.2024 US 202418639034
(71) Applicant: The Goodyear Tire & Rubber Company, Akron, OH 44316 (US)
(72) Inventor: NICULA, Adrian Florian, 2125 Luxembourg (LU); GEORGES, Francois Pierre Charles Gerard, 4970 Stavelot (BE)
(74) Representative: Kutsch, Bernd

(57) **Abstract**

An apparatus is disclosed comprising a rubber substrate (103a), a radio frequency identifier (RFID) tag (109a) encapsulated with an adhesive or adhesion promoter and attached to the rubber substrate (103a), and a wire antenna (106a) attached to the rubber substrate (103a) and inductively coupled to the RFID tag (109a). The wire antenna (106a) is encapsulated with an adhesive or an adhesion promoter. The wire antenna (106a) is arranged longitudinally along the rubber substrate (103a) in a plurality of loops with at least one of the plurality of loops placed around the RFID tag (109a). Also, a tire is disclosed having an innerliner, wherein the apparatus of at least one the previous claims is attached to the innerliner (203).

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed, toroidally-shaped, unvulcanized tire carcass, which is known in the art at that stage as a green tire, is then inserted into a mold or press for forming of the tread pattern and curing or vulcanization.

In addition, it is often desirable to collect electronic data related to the state of the tire. Accordingly, radio frequency identification (RFID) tags and their antennas can be embedded into the green tires prior to curing or vulcanization. However, inserting the RFID tag and its antenna into the green tire can causes air or other gases to become trapped within the tire. The trapped air or gases can cause blisters to form within the tire during the curing or vulcanization process as the air or gas expands due to the increase in temperature during the curing or vulcanization process.

### SUMMARY OF THE INVETION

The invention relates to an apparatus in accordance with claim 1, to a tire in accordance with claim 6 or 15 respectively, and to a method in accordance with claim 7.

Dependent claims refer to preferred embodiments of the invention.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1A is an illustration of an RFID tag within a rubber substrate according to various embodiments of the present disclosure.
FIG. 1B is an illustration of an RFID tag within a rubber substrate according to various embodiments of the present disclosure.
FIG. 2 is a perspective cross-sectional view of a tire with an RFID tag within a rubber substrate attached to the innerliner of a tire according to various embodiments of the present disclosure.
FIG. 3 is a flowchart illustrating a method of manufacturing a rubber substrate with an RFID tag enclosed within and attaching the rubber substrate to a tire.
FIG. 4 is a perspective cross-sectional view of a tire with an RFID tag within a rubber substrate embedded within the tire according to various embodiments of the present disclosure.
FIG. 5 is a flowchart illustrating a method of manufacturing a rubber substrate with an RFID tag enclosed within and embedding the rubber substrate within the tire.

### DEFINITIONS

"Innerliner" means the layer or layers of elastomer or other material that form the inside surface of a tubeless tire and that contain the inflating fluid within the tire.

### DETAILED DESCRIPTION OF PREFERRED EMBODIMENTS OF THE INVENTION

Previously, a radio-frequency identification (RFID) tag and antenna would be embedded deep within the innerliner of a tire. While this would allow the RFID tag and antenna to remain attached to the tire for the life of the tire, blisters could form within the innerliner of the tire around the embedded RFID tag and antenna. These blisters could compromise the structural integrity of the tire, shortening its lifespan and/or rendering the tire unsafe to use.

Disclosed herein are various examples related to the attachment of an RFID tag and antenna embedded within a rubber substrate to the surface of the innerliner of a tire. The rubber substrate allows the RFID tag and antenna to be securely attached to the innerliner of the tire. Moreover, by attaching the RFID tag and antenna to the surface of the innerliner of the tire, the risk of blisters forming around the RFID tag and antenna that could impact the structural integrity of the tire is eliminated. Reference will now be made in detail to the description of the embodiments as illustrated in the drawings, wherein like reference numbers indicate like parts throughout the several views.

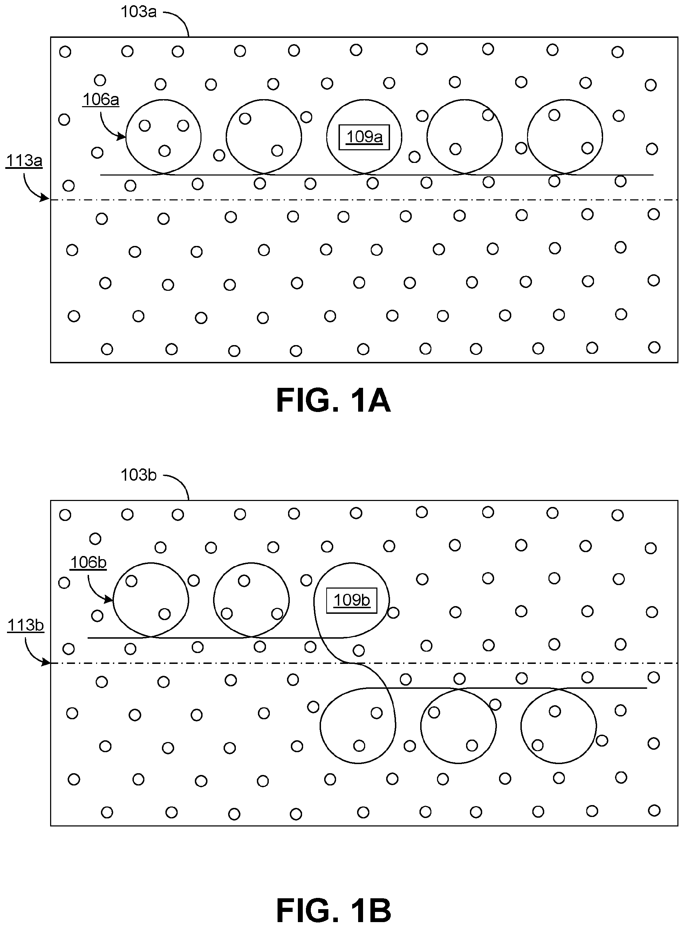

FIG. 1A depicts an example layout of various embodiments of the present disclosure. An uncured rubber substrate 103a is laid out. Although the uncured rubber substrate 103a is depicted with a rectangular shape, other shapes could be used (e.g., square, elliptical, etc.). In some embodiments, such as the embodiment depicted, the uncured rubber substate 103a could be perforated. The perforations allow for any air or other gases trapped during the manufacturing process to escape, thereby reducing the chance of blisters forming.

A wire antenna 106a and an RFID tag 109a can be attached to the uncured rubber substrate 103a as shown. The wire antenna 106a could be shaped to include a plurality of loops, and the RFID tag 109a could be positioned within one of the loops of the wire antenna 106a. The loops of the wire antenna 106a allow for the wire to stretch and compress without breaking while the tire deforms during use. If the wire antenna 106a were not positioned to include loops, then the wire antenna 106a could break if stretched longitudinally. The RFID tag 109a is placed within one of the loops of the wire antenna 106a in order to inductively couple the RFID tag 109a to the wire antenna 106a. The wire antenna 106a and the RFID tag 109a can be attached using a variety of approaches.

For example, the wire antenna 106a and the RFID tag 109a could be pressed into the uncured rubber substrate 103a, thereby embedding the wire antenna 106a and the RFID tag 109a into the uncured rubber substrate 103a. The wire antenna 106a and the RFID tag 109a could be coated with an adhesive or adhesion promoter in these embodiments to promote the binding of the wire antenna 106a and RFID tag 109a to the uncured rubber substrate 103a. The adhesive or adhesion promoter can be any chemical or compound that improves, aids, or assists that binding of the wire antenna 106a and RFID tag 109a to the uncured rubber substrate 103a. Examples of adhesives or adhesion promoters can include the CHEMLOKO line of adhesives or adhesion promoters manufactured by Parker Hannifin Corporation. Preferentially, adhesives or adhesion promoters that bind to the elastomer used for the innerliner of a tire. For example, many tires use butyl rubber for the innerliner, so an adhesive or adhesion promoter that binds well to butyl rubber (e.g., CHEMLOK 6108, 6150, 6253, 6411, 8210, 8216, or 8560S) would be preferentially used in these circumstances.

As another example, the wire antenna 106a could be stitched, sewn, or embroidered into the uncured rubber substrate 103a. In this example, the wire antenna 106a could still be coated with an adhesive or adhesion promoter. The RFID tag 109a would then be coated with an adhesive or adhesion promoter and pressed or otherwise embedded into the uncured rubber substrate 103a within one of the loops of the wire antenna 106a.

A longitudinal center axis 113a of the uncured rubber substrate 103a is depicted. In the embodiment of FIG 1A, the wire antenna 106a and the RFID tag 109a are placed on the same side of the longitudinal center axis 113a. When the uncured rubber substate 103a is folded along the longitudinal center axis 113a, the wire antenna 106a and the RFID tag 109a become encapsulated within the uncured rubber substrate 103a.

FIG. 1B depicts an example layout of various embodiments of the present disclosure. An uncured rubber substrate 103b is laid out. Although the uncured rubber substrate 103b is depicted with a rectangular shape, other shapes could be used (e.g., square, elliptical, etc.). In some embodiments, such as the embodiment depicted, the uncured rubber substrate 103b could be perforated. The perforations allow for any air or other gases trapped during the manufacturing process to escape, thereby reducing the chance of blisters forming.

Similar to the embodiment depicted in FIG. 1A, the embodiment of FIG. 1B can include a wire antenna 106b and an RFID tag 109b. Like the embodiment of FIG. 1A, the wire antenna 106b could be coated with an adhesive or adhesion promoter and either pressed, sewn, stitched, or embroidered within the uncured rubber substrate 103b. The RFID tag 109b could be coated with an adhesive or adhesion promoter and then placed within a loop of the wire antenna 106b to inductively couple the RFID tag 109b to the wire antenna 106b and pressed into the uncured rubber substrate 103b.

A longitudinal center axis 113b of the uncured rubber substrate 103b is depicted. In the embodiment of FIG 1B, the wire antenna 106b and the RFID tag 109b are placed on the same side of the longitudinal center axis 113b. When the uncured rubber substrate 103b is folded along the longitudinal center axis 113b, the wire antenna 106b and the RFID tag 109b become encapsulated within the uncured rubber substrate 103b. In contrast to the embodiment depicted in FIG. 1A, in the embodiment of FIG. 1B, the wire antenna 106b could be placed such that a first portion of the wire is attached on one side of the longitudinal center axis 113b and a second portion of the wire is attached to a second side of the longitudinal center axis 113b.

Although FIG. 1A and FIG. 1B depict alternative arrangements of the various embodiments of the present disclosure, the components therein may be generically referred to throughout the remainder of the disclosure. For example, the uncured rubber substrate 103a and 103b could be generically referred to as an uncured rubber substrate 103. Similarly, the wire antenna 106a and 106b could be generically referred to as a wire antenna 106, and the RFID tag 109a and 109b could be generically referred to as an RFID tag 109. Moreover, the longitudinal center axis 113a and 113b could be generically referred to as the longitudinal center axis 113.

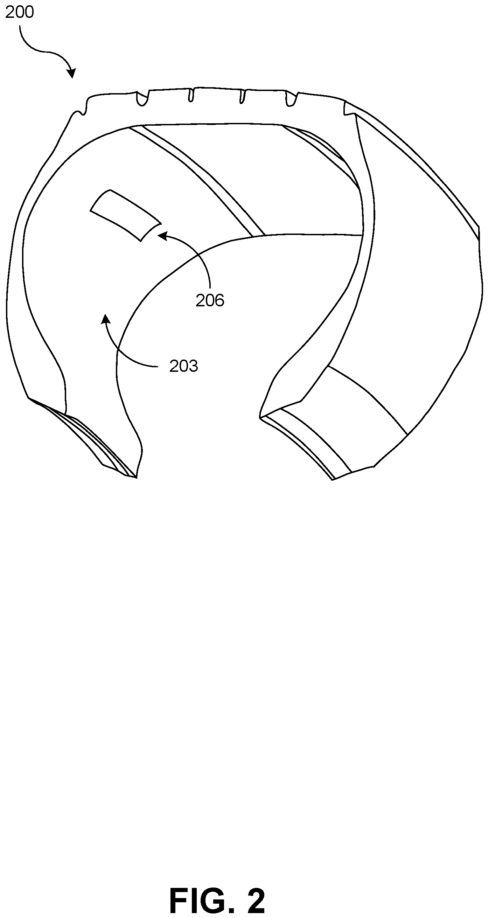

FIG. 2 is a perspective cross-sectional view of a green tire 200. The tire can include a number of components, such as the innerliner 203. A wire antenna 106 and an RFID tag 109 within a folded rubber substrate 206 can be attached to the innerliner 203 of the green tire 200. The wire antenna 106 and the RFID tag 109 within the folded rubber substrate 206 can be created by folding the uncured rubber substrate 103 of FIG. 1A or FIG. 1B along the longitudinal center axis 113 of the uncured rubber substrate 103 after the wire antenna 106 and RFID tag 109 have been attached to the uncured rubber substrate 103, thereby enclosing the wire antenna 106 and the RFID tag 109 within the folded rubber substrate 206. The folded rubber substrate 206 can then be attached to the innerliner 203 of the green tire 200.

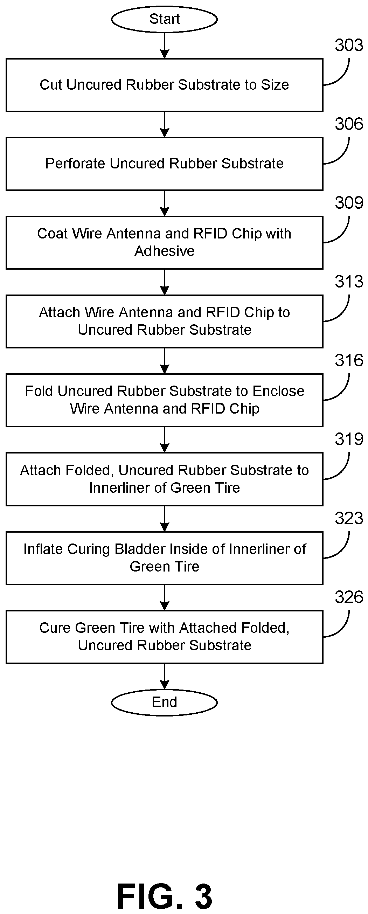

FIG. 3 is a flowchart depicting one example of a method for manufacturing a green tire 200 with a wire antenna 106 and RFID tag 109 within a folded rubber substrate 206 from an uncured rubber substrate 103. Individual steps may be omitted or performed in a different sequence than what is illustrated according to various embodiments of the present disclosure.

Beginning with block 303, one can cut the uncured rubber substrate 103 from a larger section of rubber substrate (*e.g.*, from a roll, strip, or section of rubber) to the desired size of the uncured rubber substrate 103.

Then, at block 306, the uncured rubber substrate 103 can be perforated. This could be done using a variety of techniques. For example, a laser cutter or other laser beam could be used to make perforations in the uncured rubber substrate 103. As another example, a metal roller with a plurality of protrusions could be rolled across the uncured rubber substrate 103. In these examples, the protrusions would pierce the uncured rubber substrate 103, perforating it as the metal roller is moved across the uncured rubber substrate 103.

Next, at block 309, the wire antenna 106 and the RFID tag 109 could be coated with an adhesive or adhesion promoter. For example, the wire antenna 106 and the RFID tag 109 could be sprayed with an adhesive or adhesion promoter. As another example, the wire antenna 106 and the RFID tag 109 could be dipped within the adhesive or adhesion promoter. As previously discussed, many tires use butyl rubber for the innerliner, so an adhesive or adhesion promoter that binds well to butyl rubber (*e.g.*, CHEMLOK 6108, 6150, 6253, 6411, 8210, 8216, or 8560S) would be preferentially used in these circumstances.

Moving on to block 313, the wire antenna 106 and the RFID tag 109 could be attached to the uncured rubber substrate 103. The wire antenna 106 could be pressed, embedded, stitched, sewn, or embroidered into the uncured rubber substrate 103 in the manner depicted in either FIG. 1A or FIG. 1B. The RFID tag 109 could be pressed or embedded into the uncured rubber substrate 103 within one of the loops of the wire antenna 106 as depicted in FIG. 1A or FIG. 1B.

Proceeding to block 316, the uncured rubber substrate 103 could be folded along its longitudinal center axis 113 to enclose the wire antenna 106 and the RFID tag 109 within the uncured rubber substrate 103, thereby creating a folded rubber substrate 206 that includes the wire antenna 106 and the RFID tag 109. In some instances, the folded rubber substrate 206 could be pressed or compressed to remove any gases trapped within the folded rubber substrate 206 to minimize the chances of blisters forming during the curing process.

Then, at block 319, the folded, uncured rubber substrate 206 could be attached to the innerliner 203 of a green tire 200. For example, the folded, uncured rubber substrate 206 could be pressed onto or into the innerliner 203 of the green tire 200.

Next, at block 323, a curing bladder can optionally be placed within the innerliner 203 of the green tire 200 and inflated. The inflated curing bladder will hold the shape of the green tire 200 and press the folded rubber substrate 206 into the innerliner 203 of the green tire 200 so that the folded rubber substrate 206 will bind to the innerliner 203 of the green tire 200 during the curing process.

Subsequently, at block 326, one can cure the green tire 200 while the folded rubber substrate 206 is attached to the innerliner 203 to create a tire with an RFID tag 109 and wire antenna 106 attached to it.

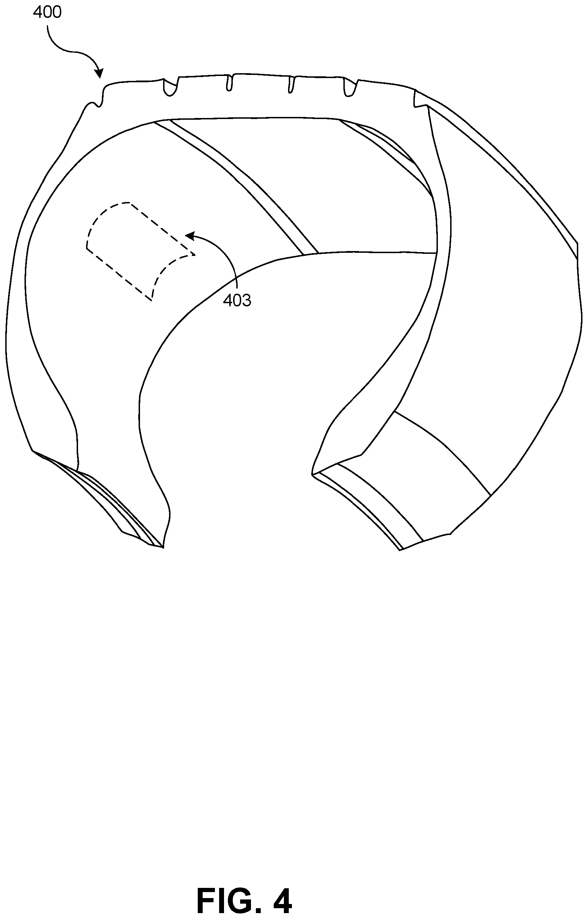

FIG. 4 is a perspective cross-sectional view of a green tire 400. The tire can include a number of components or layers. A wire antenna 106 and an RFID tag 109 within a folded rubber substrate 403 can be embedded within the green tire 400 at various depths. The embedded folded rubber substrate 403 is denoted by dashed lines to indicate that it is embedded within the green tire 400, in contrast to the green tire 200 of FIG. 2 where the folded rubber substrate 206 is attached to the exterior surface of the innerliner 203. The wire antenna 106 and the RFID tag 109 within the folded rubber substrate 403 can be created by folding the uncured rubber substrate 103 of FIG. 1A or FIG. 1B along the longitudinal center axis 113 of the uncured rubber substrate 103 after the wire antenna 106 and RFID tag 109 have been attached to the uncured rubber substrate 103, thereby enclosing the wire antenna 106 and the RFID tag 109 within the folded rubber substrate 403. The folded rubber substrate 403 can then be embedded within the green tire 400 using various approaches.

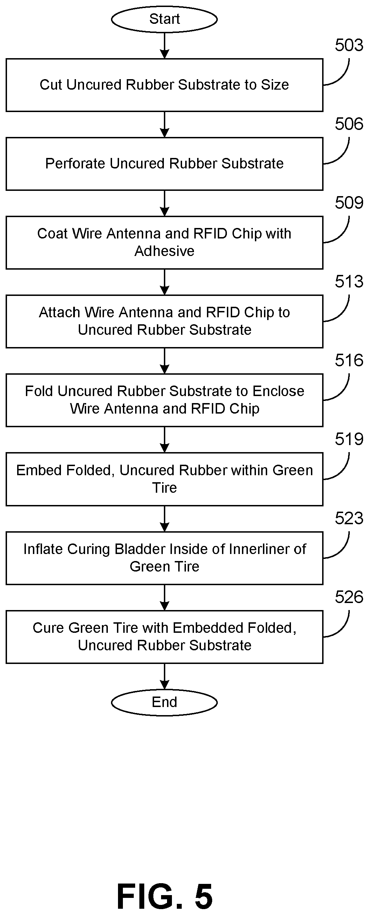

FIG. 5 is a flowchart depicting one example of a method for manufacturing a green tire 400 with a wire antenna 106 and RFID tag 109 within a folded rubber substrate 403 from an uncured rubber substrate 103. Individual steps may be omitted or performed in a different sequence than what is illustrated according to various embodiments of the present disclosure.

Beginning with block 503, one can cut the uncured rubber substrate 103 from a larger section of rubber substrate (e.g., from a roll, strip, or section of rubber) to the desired size of the uncured rubber substrate 103.

Then, at block 506, the uncured rubber substrate 103 can be perforated. This could be done using a variety of techniques. For example, a laser cutter or other laser beam could be used to make perforations in the uncured rubber substrate 103. As another example, a metal roller with a plurality of protrusions could be rolled across the uncured rubber substrate 103. In these examples, the protrusions would pierce the uncured rubber substrate 103, perforating it as the metal roller is moved across the uncured rubber substrate 103.

Next, at block 509, the wire antenna 106 and the RFID tag 109 could be coated with an adhesive or adhesion promoter. For example, the wire antenna 106 and the RFID tag 109 could be sprayed with an adhesive or adhesion promoter. As another example, the wire antenna 106 and the RFID tag 109 could be dipped within the adhesive or adhesion promoter. As previously discussed, many tires use butyl rubber the various layers, so an adhesive or adhesion promoter that binds well to butyl rubber (e.g., CHEMLOK 6108, 6150, 6253, 6411, 8210, 8216, or 8560S) would be preferentially used in these circumstances.

Moving on to block 513, the wire antenna 106 and the RFID tag 109 could be attached to the uncured rubber substrate 103. The wire antenna 106 could be pressed, embedded, stitched, sewn, or embroidered into the uncured rubber substrate 103 in the manner depicted in either FIG. 1A or FIG. 1B. The RFID tag 109 could be pressed or embedded into the uncured rubber substrate 103 within one of the loops of the wire antenna 106 as depicted in FIG. 1A or FIG. 1B.

Proceeding to block 516, the uncured rubber substrate 103 could be folded along its longitudinal center axis 113 to enclose the wire antenna 106 and the RFID tag 109 within the uncured rubber substrate 103, thereby creating a folded rubber substrate 403 that includes the wire antenna 106 and the RFID tag 109. In some instances, the folded rubber substrate 403 could be pressed or compressed to remove any gases trapped within the folded rubber substrate 403 to minimize the chances of blisters forming during the curing process.

Then, at block 319, the folded, uncured rubber substrate 206 could be embedded within the green tire 400. For example, the folded, uncured rubber substrate 403 could be inserted between two layers of the green tire 400 during the assembly of the green tire 400. As another example, the folded, uncured rubber substrate 403 could be attached to or embedded in an interior layer of the green tire 400 during assembly of the green tire 400.

Next, at block 423, a curing bladder can optionally be placed within the green tire 400 and inflated.

Subsequently, at block 426, one can cure the green tire 400 while the folded rubber substrate 403 is embedded within the green tire 400 to create a tire with an RFID tag 109 and wire antenna 106 embedded within it.

## Claims

1. An apparatus comprising a rubber substrate (103a), a radio frequency identifier (RFID) tag (109a) encapsulated with an adhesive or adhesion promoter and attached to the rubber substrate (103a), and a wire antenna (106a) attached to the rubber substrate (103a) and inductively coupled to the RFID tag (109a), wherein the wire antenna (106a) is encapsulated with an adhesive or an adhesion promoter and wherein the wire antenna (106a) is arranged longitudinally along the rubber substrate (103a) in a plurality of loops with at least one of the plurality of loops placed around the RFID tag (109a).

2. The apparatus of claim 1, wherein the wire antenna (106a) is stitched into the rubber substrate (103a).

3. The apparatus of claim 1 or 2, wherein the wire antenna (106a) is embedded into the rubber substrate (103a).

4. The apparatus of at least one the previous claims, wherein the rubber substrate (103a) is attached to an innerliner (203) of a tire.

5. The apparatus of at least one the previous claims, wherein the rubber substrate (103a) is perforated.

6. A tire having an innerliner, wherein the apparatus of at least one the previous claims is attached to the innerliner (203).

7. A method for manufacturing a tire, the method comprising:
cutting an uncured rubber substrate (103a) to a predefined size;
coating a wire antenna (106a) and a radio-frequency identification (RFID) tag (109a) in an adhesive;
attaching the wire antenna (106a) to the uncured rubber substrate (103a), the wire antenna being arranged with a plurality of loops;
attaching the RFID tag (109a) to the uncured rubber substrate (103a), wherein the RFID tag is place within one of the plurality of loops of the wire antenna (106a) to inductively couple the RFID tag to the wire antenna;
folding the uncured rubber substrate (103a) along a longitudinal center axis to enclose the wire antenna and the RFID tag within a folded uncured rubber substrate;
attaching the folded uncured rubber substrate to an innerliner (203) of a green tire (200);
inflating a curing bladder within the innerliner (203) of the green tire (200); and
curing the green tire (200) to create the tire.

8. The method of claim 7, wherein attaching the wire antenna (106a) to the uncured rubber substrate (103a) comprises pressing the wire antenna into the uncured rubber substrate.

9. The method of claim 7 or 8, wherein attaching the wire antenna to the uncured rubber substrate comprises stitching the wire antenna into the uncured rubber substrate.

10. The method of at least one the previous claims 7 to 9, further comprising perforating the uncured rubber substrate (103a) prior to attaching the wire antenna and prior to attaching the RFID tag.

11. The method of claim 10, wherein perforating the uncured rubber substrate (103a) is performed with a laser.

12. The method of claim 10, wherein perforating the uncured rubber substrate (103a) is performed with a roller with a plurality of protrusions.

13. The method of at least one the previous claims 7 to 12, further comprising compressing the folded uncured rubber substrate prior to attaching the folded uncured rubber substrate to the innerliner (203) of the green tire (200).

14. The method of at least one the previous claims 7 to 13, wherein coating the wire antenna (106a) and the RFID tag (109a) in an adhesive or adhesion promoter further comprises dipping the wire antenna and the RFID tag in an adhesive or adhesion promoter.

15. A tire manufactured by method of at least one the previous claims 7 to 14.
